(19) Europäisches Patentamt
European Patent Office
Office européen des brevets

(11) **EP 4 760 795 A2**

(12) **EUROPEAN PATENT APPLICATION**

(43) Date of publication:
**17.06.2026 Bulletin 2026/25**

(21) Application number: **26169447.5**

(22) Date of filing: **31.03.2026**

(51) International Patent Classification (IPC):
**H01M 4/13** $^{(2010.01)}$   **H01M 10/0525** $^{(2010.01)}$
**H01M 10/0587** $^{(2010.01)}$

(52) Cooperative Patent Classification (CPC):
**H01M 4/13; H01M 10/0525; H01M 10/0587;**
H01M 2004/021; Y02E 60/10; Y02P 70/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.05.2025 CN 202510713841**

(71) Applicants:
• **Dongguan Amperex Technology Limited
Dongguan City, Guangdong Province 523000
(CN)**
• **Ningde Amperex Technology Limited
Ningde, Fujian 352100 (CN)**

(72) Inventor: **PENG, Ji
Dongguan City 523000 (CN)**

(74) Representative: **Kraus & Lederer PartGmbB
Thomas-Wimmer-Ring 15
80539 München (DE)**

(54) **SECONDARY BATTERY AND ELECTRONIC DEVICE**

(57)    A secondary battery (100) includes an electrode assembly (20) with a wound structure, and the electrode assembly (20) includes a first electrode plate (21). The first electrode plate (21) includes a first current collector (211) and a first active material layer (212), and the first current collector (211) includes a first surface (211A) and a second surface (211B). The first current collector (211) includes a first section (2111) and a second section (2112), where the first surface (211A) and the second surface (211B) of the first section (2111) are both provided with the first active material layer (212), the second surface (211B) of the second section (2112) is provided with the first active material layer (212), and the first surface (211A) of the second section (2112) is not provided with an active material layer. A position where the first section (2111) and the second section (2112) meet is defined as a boundary line (101), and the first electrode plate (21) corresponding to the first section (2111) includes a first region (213), where the first region (213) is a region extending by a distance $L_1$ from the boundary line (101) along a direction from the second section (2112) toward the first section (2111), and $0.5\ \text{mm} \leq L_1 \leq 5\ \text{mm}$. The first current collector (211) in the first region (213) is a first sub-section (2111A), the first active material layer (212) on the first surface (211A) of the first sub-section (2111A) is a first portion (212A), and at least one recess (102) is provided on the first portion (212A).

FIG. 2

## EP 4 760 795 A2

**Description**

### TECHNICAL FIELD

This application relates to the field of energy storage technologies, and in particular, to a secondary battery and an electronic device.

### BACKGROUND

With popularity of consumer electronic products such as notebook computers, mobile phones, handheld game consoles, tablet computers, mobile power supplies, and drones, requirements for safety performance and cycle life of secondary batteries are increasingly stringent.

A secondary battery includes an electrode assembly. In the related art, based on reasons such as energy density and safety, the region where a slurry for a negative electrode active material layer is coated on a single side of a negative electrode plate of the electrode assembly is typically referred to as a single-side coated region, and the region where a slurry for the negative electrode active material layer is coated on two sides of the negative electrode plate is typically referred to as a double-side coated region. However, such electrode assemblies are prone to lithium deposition during the cycling process, reducing the safety and shortening cycle life of the secondary battery.

### SUMMARY

In view of this, it is necessary to provide a secondary battery and an electronic device to lower the risk of lithium deposition, and improve the safety and prolong cycle life of the secondary battery.

Some embodiments of this application provide a secondary battery, including an electrode assembly, where the electrode assembly has a wound structure, and the electrode assembly includes a first electrode plate. The first electrode plate includes a first current collector and a first active material layer provided on the first current collector. Along a first direction, the first current collector includes a first surface and a second surface, where the first direction is a thickness direction of the first electrode plate. The first current collector has a first section and a second section sequentially provided, where the first surface of the first section and the second surface of the first section are both provided with the first active material layer, the second surface of the second section is provided with the first active material layer, and the first surface of the second section is not provided with an active material layer. The position where the first section and the second section meet is defined as a boundary line, and the first electrode plate corresponding to the first section includes a first region, where the first region is a region extending a distance $L_1$ from the boundary line along the direction from the second section toward the first section, and $0.5\,mm \leq L_1 \leq 5\,mm$. The first current collector in the first region is a first sub-section, the first active material layer on the first surface of the first sub-section is a first portion, at least one recess is provided on the first portion, and the recess in the first portion is a recess formed by a surface of the first portion facing away from the first sub-section being recessed toward the first sub-section.

A coating starting position of a slurry for the first active material layer on the first surface of the first current collector is the boundary position between the single-side coated region and the double-side coated region, and this position is prone to slurry accumulation, leading to a thickness of the first portion being greater than a thickness of a single layer of the first active material layer in the second region. During cold pressing of the first electrode plate, the position where the first portion is located is over-pressed, causing compaction density of the first portion to be greater than compaction density of the first active material layer in the second region, thereby resulting in high lithium ion transmission impedance at this position and high risk of lithium deposition. By providing a recess on the first portion, it facilitates the infiltration and storage of an electrolyte, reducing the lithium ion transmission impedance in the first region, shortening the lithium ion transmission distance, lowering the risk of lithium deposition on the surface of the first portion, and improving the safety and prolonging service life of the battery. Moreover, Li being greater than or equal to 0.5 mm ensures the region where the first portion is provided with the recess, which is conducive to lowering the risk of lithium deposition. On the basis that $L_1$ being less than or equal to 5 mm is conducive to lowering the risk of lithium deposition, the impact on the energy density of the secondary battery due to excessive removal of the first active material layer caused by forming the recess is reduced.

In the above one or more optional embodiments, the first active material layer on the second surface of the first sub-section is a second portion, at least one recess is provided on the second portion, and the recess in the second portion is a recess formed by the surface of the second portion facing away from the first sub-section being recessed toward the first sub-section. By providing a recess on the second portion, it facilitates the infiltration and storage of the electrolyte, further reducing the lithium ion transmission impedance in the first region, shortening the lithium ion transmission distance, lowering the risk of lithium deposition on the second surface of the first sub-section, and improving the safety and prolonging service life of the battery.

In the above one or more optional embodiments, the first electrode plate corresponding to the first section further includes a second region, and along the winding direction of the electrode assembly, the second region includes a first edge and a second edge; along the winding direction of the electrode assembly, a distance from the first edge to the boundary line is 20 mm, and a distance from the second edge to an end edge of the electrode assembly is 20 mm; and the first region satisfies at least one of the following: (a). $0.5 \text{ mm} \leq L_1 \leq 3 \text{ mm}$, on the basis of ensuring the region where the first portion is provided with the recess and facilitating lowering the risk of lithium deposition, the impact on the energy density of the secondary battery due to excessive removal of the first active material layer caused by forming the recess is further reduced; (b). along the first direction, a thickness of the first portion is $H_1$, and a thickness of a single layer of the first active material layer in the second region is $H_3$, where $1.05 \leq H_1/H_3 \leq 1.2$; and (c). compaction density of the first portion is $\rho_1$, and compaction density of the first active material layer in the second region is $\rho_3$, where $1.05 \leq \rho_1/\rho_3 \leq 1.2$.

In the above one or more optional embodiments, the first electrode plate corresponding to the second section includes a third region, where the third region is a region extending a distance $L_2$ from the boundary line along the direction from the first section toward the second section, and $1 \text{ mm} \leq L_2 \leq 7 \text{ mm}$. The first active material layer in the third region is a third portion, and at least one recess is provided on the third portion, and the recess in the third portion is a recess formed by the surface of the third portion facing away from the second section being recessed toward the second section. Since the thickness of the first portion is greater than the thickness of a single layer of the first active material layer in the second region, the existence of the thickness difference causes that the first active material layer of the third portion cannot be pressed by a roller, leading to a thickness of the third portion being greater than a thickness of the first active material layer in the second region that is normally cold-pressed, resulting in compaction density of the third portion being less than the compaction density of the first active material layer in the second region, a long lithium ion migration distance, and a high risk of lithium deposition. By providing a recess on the third portion, it facilitates the infiltration and storage of the electrolyte, reducing the lithium ion transmission impedance in the third region, shortening the lithium ion transmission distance, lowering the risk of lithium deposition on the surface of the third portion, and improving the safety and prolonging service life of the battery. Moreover, $L_2$ being greater than or equal to 1 mm ensures the region where the third portion is provided with the recess, which is conducive to lowering the risk of lithium deposition. On the basis that $L_2$ being less than or equal to 7 mm is conducive to lowering the risk of lithium deposition, the impact on the energy density of the secondary battery due to excessive removal of the first active material layer caused by forming the recess is reduced.

In the above one or more optional embodiments, the first electrode plate corresponding to the first section further includes a second region, and along the winding direction of the electrode assembly, the second region includes a first edge and a second edge; along the winding direction of the electrode assembly, a distance from the first edge to the boundary line is 20 mm, and a distance from the second edge to the end edge of the electrode assembly is 20 mm; and the third region satisfies at least one of the following: (a). along the first direction, a thickness of the third portion is $H_2$, and a thickness of a single layer of the first active material layer in the second region is $H_3$, where $1.1 \leq H_2/H_3 \leq 1.5$; and (b). compaction density of the third portion is $\rho_2$, and compaction density of the first active material layer in the second region is $\rho_3$, where $0.65 \leq \rho_2/\rho_3 \leq 0.95$.

In the above one or more optional embodiments, a total area of the recess in $1 \text{ mm}^2$ of the first portion is $S_1$, where $0.01 \text{ mm}^2 \leq S_1 \leq 0.15 \text{ mm}^2$. $S_1$ being greater than or equal to $0.01 \text{ mm}^2$ ensures the area where the first portion is provided with the recess, which is conducive to lowering the risk of lithium deposition. $S_1$ being less than or equal to $0.15 \text{ mm}^2$ reduces the impact on the energy density of the secondary battery due to excessive removal of the first active material layer caused by forming the recess.

In the above one or more optional embodiments, $0.04 \text{ mm}^2 \leq S_1 \leq 0.1 \text{ mm}^2$, further ensuring the area where the first portion is provided with the recess, which is conducive to lowering the risk of lithium deposition and further reducing the impact on the energy density of the secondary battery.

In the above one or more optional embodiments, a total area of the recess in $1 \text{ mm}^2$ of the third portion is $S_2$, where $0.01 \text{ mm}^2 \leq S_2 \leq 0.15 \text{ mm}^2$. $S_2$ being greater than or equal to $0.01 \text{ mm}^2$ ensures the area where the third portion is provided with the recess, which is conducive to lowering the risk of lithium deposition. $S_2$ being less than or equal to $0.15 \text{ mm}^2$ reduces the impact on the energy density of the secondary battery due to excessive removal of the first active material layer caused by forming the recess.

In the above one or more optional embodiments, $0.04 \text{ mm}^2 \leq S_2 \leq 0.1 \text{ mm}^2$, further ensuring the area where the third portion is provided with the recess, which is conducive to lowering the risk of lithium deposition and further reducing the impact on the energy density of the secondary battery.

In the above one or more optional embodiments, along the first direction, a thickness of the first portion is $H_1$, and a depth of the recess in the first portion is $h_1$, where $1/6 \leq h_1/H_1 \leq 5/6$. $h_1/H_1$ being greater than or equal to 1/6 ensures the depth of the recess in the first portion, which is conducive to lowering the risk of lithium deposition. $h_1/H_1$ being less than or equal to 5/6 reduces the impact on the energy density of the secondary battery due to excessive depth.

In the above one or more optional embodiments, $1/3 \leq h_1/H_1 \leq 2/3$, further ensuring the depth of the recess in the first portion, which is conducive to lowering the risk of lithium deposition and further reducing the impact on the energy density of the secondary battery due to excessive depth.

In the above one or more optional embodiments, along the first direction, a thickness of the third portion is $H_2$, and

a depth of the recess in the third portion is $h_2$, where $1/6 \leq h_2/H_2 \leq 5/6$. $h_2/H_2$ being greater than or equal to 1/6 ensures the depth of the recess in the third portion, which is conducive to lowering the risk of lithium deposition. $h_2/H_2$ being less than or equal to 5/6 reduces the impact on the energy density of the secondary battery due to excessive depth.

In the above one or more optional embodiments, $1/3 \leq h_2/H_2 \leq 2/3$, further ensuring the depth of the recess in the third portion, which is conducive to lowering the risk of lithium deposition and further reducing the impact on the energy density of the secondary battery due to excessive depth.

In the above one or more optional embodiments, the first electrode plate corresponding to the first section further includes a second region, and along the winding direction of the electrode assembly, the second region includes a first edge and a second edge; along the winding direction of the electrode assembly, the distance from the first edge to the boundary line is 20 mm, and the distance from the second edge to the end edge of the electrode assembly is 20 mm; and the first active material layer in the second region is also provided with at least one recess, a total area of the recess in the first active material layer in 1 $mm^2$ of the second region is $S_3$, the total area of the recess in 1 $mm^2$ of the first portion is $S_1$, the total area of the recess in 1 $mm^2$ of the third portion is $S_2$, the depth of the recess in the first portion is hi, the depth of the recess in the third portion is $h_2$, along the first direction, the thickness of a single layer of the first active material layer in the second region is $H_3$, the depth of the recess in the second region is $h_3$, and $S_1$ or $S_2$ or $h_1$ or $h_2$ satisfies at least one of the following: (a). $0.5 \leq S_1/S_3 \leq 0.95$; (b). $0.6 \leq S_1/S_3 \leq 0.85$; (c). $0.5 \leq S_2/S_3 \leq 0.95$; (d). $0.6 \leq S_2/S_3 \leq 0.85$; (e). $1.05 \leq h_1/h_3 \leq 1.2$; (f). $1.1 \leq h_1/h_3 \leq 1.15$; (g). $1.1 \leq h_2/h_3 \leq 1.5$; and (h). $1.2 \leq h_2/h_3 \leq 1.4$. This is conducive to lowering the risk of lithium deposition in the second region.

In the above one or more optional embodiments, a width direction after the first electrode plate is unfolded is defined as a second direction, and a length direction after the first electrode plate is unfolded is defined as a third direction, the first direction, the second direction, and the third direction being perpendicular to each other. The recess extends along the second direction, and when viewed along the first direction, a width of a single recess along the third direction is $W_1$, where $20 \mu m \leq W_1 \leq 300 \mu m$; or, the recess extends along the third direction, and when viewed along the first direction, a width of a single recess along the second direction is $W_1$, and $20 \mu m \leq W_1 \leq 300 \mu m$. This is conducive to lowering the risk of lithium deposition.

In the above one or more optional embodiments, a width of the first active material layer along the second direction is W, and when the recess extends along the second direction, a length of a single recess along the second direction is $W_2$, where $0.6 \leq W_2/W \leq 1$. This is conducive to lowering the risk of lithium deposition.

In the above one or more optional embodiments, when viewed along the first direction, a single recess is substantially circular, and a diameter of a single recess is $D_1$, where $0.5$ mm $\leq D_1 \leq 3$ mm. This is conducive to lowering the risk of lithium deposition.

In the above one or more optional embodiments, a plurality of recesses are provided at intervals, and the spacing between adjacent recesses is $D_2$, where $0.5$ mm $\leq D_2 \leq 3$ mm, which is conducive to lowering the risk of lithium deposition.

In the above one or more optional embodiments, the first electrode plate is a negative electrode plate.

Some embodiments of this application provide an electronic device, including the secondary battery in any of the above embodiments.

The above electronic device is powered by the above secondary battery, and the lithium deposition situation of the electrode assembly is improved, so the secondary battery has higher safety and longer cycle life.

BRIEF DESCRIPTION OF DRAWINGS

FIG. 1 shows a schematic cross-sectional view of a secondary battery according to some embodiments.

FIG. 2 shows a schematic structural diagram of the first electrode plate in an unfolded state according to some embodiments.

FIG. 3 shows a schematic structural diagram of the first electrode plate in an unfolded state from another perspective according to some embodiments.

FIG. 4 shows a schematic structural diagram of the first electrode plate in an unfolded state from still another perspective according to some embodiments.

FIG. 5 shows a schematic structural diagram of the first electrode plate in an unfolded state according to other embodiments.

FIG. 6 shows a schematic structural diagram of the first electrode plate in an unfolded state according to some other embodiments.

FIG. 7 shows a schematic structural diagram of an electronic device according to some embodiments.

Reference signs of main components:

| | |
|---|---|
| Secondary battery | 100 |
| Housing | 10 |
| Electrode assembly | 20 |
| First electrode plate | 21 |
| Second electrode plate | 22 |
| Separator | 23 |
| First current collector | 211 |
| First surface | 211A |
| Second surface | 211B |
| | |
| First section | 2111 |
| Second section | 2112 |
| First sub-section | 2111A |
| First active material layer | 212 |
| First portion | 212A |
| Second portion | 212B |
| Third portion | 212C |
| First region | 213 |
| Second region | 214 |
| First edge | 2141 |
| Second edge | 2142 |
| Third region | 215 |
| Boundary line | 101 |
| Recess | 102 |
| Electronic device | 200 |
| First direction | X |
| Second direction | Y |
| Third direction | Z |
| Winding direction | S |

This application is further described with reference to the accompanying drawings in the following specific embodiments.

## DETAILED DESCRIPTION

The following describes the technical solutions in some embodiments of this application with reference to the accompanying drawings in these embodiments of this application. Apparently, the described embodiments are some but not all embodiments of this application.

When one component is assumed as being "disposed at/on/in" another component, the component may be provided directly at/on/in the another component or with a component possibly present therebetween. When one component is assumed as being "connected to" another component, the component may be directly connected to the another component or with a component possibly present therebetween.

Unless otherwise defined, all technical and scientific terms used herein shall have the same meanings as commonly understood by persons skilled in the art to which this application relates. The terms used in the specification of this application are intended to merely describe the specific embodiments rather than to limit this application. The term "or/and" used herein includes any and all combinations of one or more related listed items.

It should be understood that the term "perpendicular" is used for describing an ideal state of two components. During actual production or use, an approximately perpendicular or equal state may be present between the two components. For example, with reference to the description of numerical values, "perpendicular" may indicate that an included angle between two straight lines is within a range of 90°±10°, "perpendicular" may alternatively indicate that a dihedral angle of two planes is within a range of 90°+10°, and "perpendicular" may further alternatively indicate that an included angle between a straight line and a plane is within a range of 90°+10°. Two components described as "perpendicular" to each other may not be absolutely straight lines or planes, and may be approximately straight lines or planes. From a macro perspective, a component can be considered as a "straight line" or "plane" as long as the overall extension direction is a straight line or a plane.

Unless otherwise defined, the term "a plurality of' in the specification specifically indicates that there are two or more components when used for describing the number of components.

The following describes in detail some embodiments of this application with reference to the accompanying drawings. In absence of conflicts, the following embodiments and features in some embodiments may be combined.

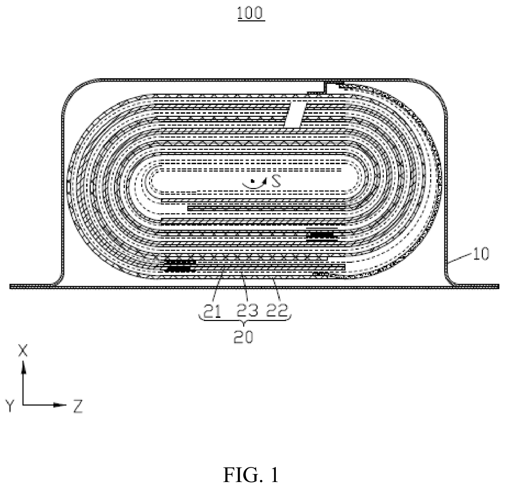

Referring to FIG. 1, an embodiment of this application provides a secondary battery 100, including a housing 10, an electrode assembly 20, an electrolyte (not shown in the drawings), and an electrode tab (not labeled). The electrode assembly 20 and the electrolyte are located inside the housing 10.

The electrode assembly 20 includes a first electrode plate 21, a second electrode plate 22, and a separator 23, where the separator 23 is disposed between the first electrode plate 21 and the second electrode plate 22. The electrode assembly 20 has a wound structure, that is, the first electrode plate 21, the separator 23, and the second electrode plate 22 are stacked and wound. The electrode tab includes a first electrode tab and a second electrode tab, where the first electrode tab is connected to the first electrode plate 21, and the second electrode tab is connected to the second electrode plate 22. Optionally, the first electrode plate 21 is a negative electrode plate, and the second electrode plate 22 is a positive electrode plate.

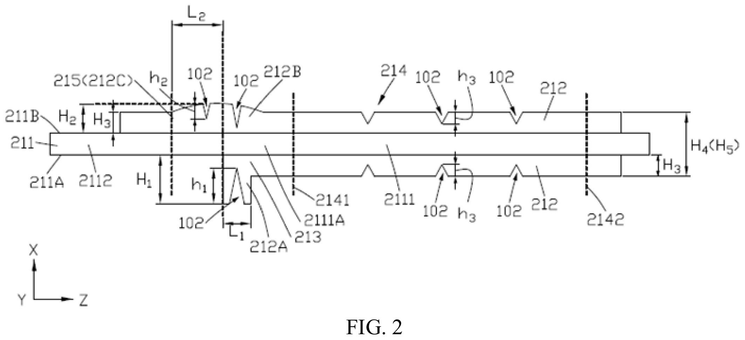

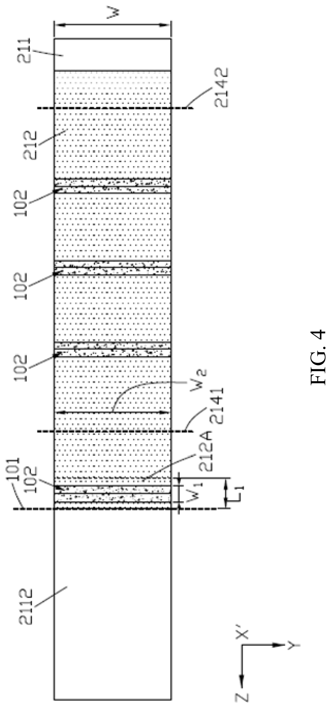

Referring to FIG. 2 to FIG. 4, the first electrode plate 21 includes a first current collector 211 and a first active material layer 212 disposed on at least part of the first current collector 211. A thickness direction of the first electrode plate 21 is used as a first direction X, the first current collector 211 includes a first surface 211A and a second surface 211B arranged oppositely along the first direction X.

Along a winding direction S of the electrode assembly 20, the first current collector 211 has a first section 2111 and a second section 2112, where the first surface 211A of the first section 2111 and the second surface 211B of the first section 2111 are both provided with the first active material layer 212. The second surface 211B of the second section 2112 is provided with the first active material layer 212, and the first surface 211A of the second section 2112 is not provided with the active material layer 212. That is, the first section 2111 is a double-side coated region, and the second section 2112 is a single-side coated region.

In some embodiments, the position where the first section 2111 and the second section 2112 meet is defined as a boundary line 101, and the first electrode plate 21 corresponding to the first section 2111 includes a first region 213, where the first region 213 is a region extending a distance $L_1$ from the boundary line 101 along a direction from the second section 2112 toward the first section 2111, and $0.5 \text{ mm} \leq L_1 \leq 5 \text{ mm}$.

The first current collector 211 in the first region 213 is a first sub-section 2111A, the first active material layer 212 on the first surface 211A of the first sub-section 2111A is a first portion 212A, and at least one recess 102 is provided on the first portion 212A.

In some embodiments, the first electrode plate 21 corresponding to the first section 2111 further includes a second region 214, and along the winding direction S of the electrode assembly 20, the second region 214 includes a first edge 2141 and a second edge 2142, a distance from the first edge 2141 to the boundary line 101 is 20 mm, and a distance from the second edge 2142 to an end edge of the electrode assembly 20 is 20 mm.

In some embodiments, along the first direction X, a thickness of the first portion 212A is $H_1$, and a thickness of a single layer of the first active material layer 212 in the second region 214 is $H_3$, where $1.05 \leq H_1/H_3 \leq 1.2$.

In some embodiments, compaction density of the first portion 212A is $\rho_1$, and compaction density of the first active material layer 212 in the second region 214 is $\rho_3$, where $1.05 \leq \rho_1/\rho_3 \leq 1.2$.

A coating starting position of a slurry for the first active material layer 212 on the first surface 211A of the first current collector 211 is the boundary position between the single-side coated region and the double-side coated region, and this position is prone to slurry accumulation, leading to a thickness $H_1$ of the first portion 212A being greater than the thickness $H_3$ of a single layer of the first active material layer 212 in the second region 214. During cold pressing of the first electrode plate 21, the position where the first portion 212A is located is over-pressed, causing the compaction density of the first portion 212A to be greater than the compaction density of the first active material layer 212 in the second region 214, thereby resulting in high lithium ion transmission impedance at this position and high risk of lithium deposition. In this application, by providing a recess 102 on the first portion 212A, it facilitates the infiltration and storage of the electrolyte, reducing the lithium ion transmission impedance in the first region 213, shortening the lithium ion transmission distance, lowering the risk of lithium deposition on the surface of the first portion 212A, and improving the safety and prolonging service life of the battery. Moreover, $L_1$ being greater than or equal to 0.5 mm ensures the region where the first portion 212A is provided with the recess 102, which is conducive to lowering the risk of lithium deposition. On the basis that $L_1$ being less than or equal to 5 mm is conducive to lowering the risk of lithium deposition, the impact on the energy density of the secondary battery 100 due to excessive removal of the first active material layer 212 caused by forming the recess 102 is reduced.

Optionally, $L_1$ may be any one of 0.5 mm, 0.8 mm, 1.0 mm, 1.2 mm, 1.4 mm, 1.6 mm, 1.8 mm, 2 mm, 2.2 mm, 2.4 mm, 2.6 mm, 2.8 mm, 3 mm, 3.2 mm, 3.4 mm, 3.6 mm, 3.8 mm, 4 mm, 4.2 mm, 4.4 mm, 4.6 mm, 4.8 mm, 5 mm, or a range defined by any two of these values.

In some embodiments, $0.5 \text{ mm} \leq L_1 \leq 3 \text{ mm}$, on the basis of ensuring the region where the first portion 212A is provided with the recess 102 and facilitating lowering the risk of lithium deposition, the impact on the energy density of the secondary battery 100 due to excessive removal of the first active material layer 212 caused by forming the recess 102 is further reduced.

In some embodiments, a total area of the recess 102 in 1 mm$^2$ of the first portion 212A is $S_1$, where $0.01 \text{ mm}^2 \leq S_1 \leq 0.15 \text{ mm}^2$. $S_1$ being greater than or equal to 0.01 mm$^2$ ensures the area where the first portion 212A is provided with the recess 102, which is conducive to lowering the risk of lithium deposition. $S_1$ being less than or equal to 0.15 mm$^2$ reduces the impact on the energy density of the secondary battery 100 due to excessive removal of the first active material layer 212 caused by forming the recess 102.

Optionally, $S_1$ may be any one of 0.01 mm$^2$, 0.02 mm$^2$, 0.03 mm$^2$, 0.04 mm$^2$, 0.05 mm$^2$, 0.06 mm$^2$, 0.07 mm$^2$, 0.08 mm$^2$, 0.09 mm$^2$, 0.1 mm$^2$, 0.11 mm$^2$, 0.12 mm$^2$, 0.13 mm$^2$, 0.14 mm$^2$, 0.15 mm$^2$, or a range defined by any two of these values.

In some embodiments, $0.04 \text{ mm}^2 \leq S_1 \leq 0.1 \text{ mm}^2$, further ensuring the area where the first portion 212A is provided with the recess 102, which is conducive to lowering the risk of lithium deposition and further reducing the impact on the energy density of the secondary battery 100.

In some embodiments, along the first direction X, a thickness of the first portion 212A is $H_1$, and a depth of the recess 102 in the first portion 212A is $h_1$, where $1/6 \leq h_1/H_1 \leq 5/6$. $h_1/H_1$ being greater than or equal to 1/6 ensures the depth of the recess 102 in the first portion 212A, which is conducive to lowering the risk of lithium deposition. $h_1/H_1$ being less than or equal to 5/6 reduces the impact on the energy density of the secondary battery 100 due to excessive depth.

In some embodiments, $1/3 \leq h_1/H_1 \leq 2/3$, further ensuring the depth of the recess 102 in the first portion 212A, which is conducive to lowering the risk of lithium deposition and further reducing the impact on the energy density of the secondary battery 100 due to excessive depth.

Optionally, a ratio range of $h_1/H_1$ may be any one of 1/6, 1/3, 1/2, 2/3, 5/6, or a range defined by any two of these values.

Referring to FIG. 2, in some embodiments, the first active material layer 212 on the second surface 211B of the first sub-section 2111A is a second portion 212B, and at least one recess 102 is provided on the second portion 212B. Since the thickness of the first portion 212A is greater than the thickness $H_3$ of a single layer of the first active material layer 212 in the second region 214, the overall thickness of the first region 213 of the first electrode plate 21 increases, and while the position where the first portion 212A is located is over-pressed, the position where the second portion 212B is located is also over-pressed. By providing a recess 102 on the second portion 212B, it facilitates the infiltration and storage of the electrolyte, further reducing the lithium ion transmission impedance in the first region 213, shortening the lithium ion transmission distance, lowering the risk of lithium deposition on the second surface 211B of the first sub-section 2111A, and improving the safety and prolonging service life of the battery.

In some embodiments, an area range of the recess 102 provided on the second portion 212B is the same as an area range of the recess 102 provided on the first portion 212A, and a ratio range of the thickness of the second portion 212B to the depth of the recess 102 is the same as a ratio range of the thickness of the first portion 212A to the depth of the recess 102.

Referring to FIG. 2 to FIG. 4, in some embodiments, the first electrode plate 21 corresponding to the second section 2112 includes a third region 215, where the third region 215 is a region extending a distance $L_2$ from the boundary line 101 along the direction from the first section 2111 toward the second section 2112, and $1 \text{ mm} \leq L_2 \leq 7 \text{ mm}$. The first active material layer 212 in the third region 215 is a third portion 212C, and at least one recess 102 is provided on the third portion 212C.

In some embodiments, along the first direction X, a thickness of the third portion 212C is $H_2$, the thickness of a single layer of the first active material layer 212 in the second region 214 is $H_3$, where $1.1 \leq H_2/H_3 \leq 1.5$.

In some embodiments, compaction density of the third portion 212C is $\rho_2$, and compaction density of the first active material layer in the second region 214 is $\rho_3$, where $0.65 \leq \rho_2/\rho_3 \leq 0.95$.

Since the thickness of the first portion 212A is greater than the thickness $H_3$ of a single layer of the first active material layer 212 in the second region 214, the existence of the thickness difference causes that the first active material layer 212 of the third portion 212C cannot be pressed by a roller, leading to a thickness of the third portion 212C being greater than the thickness $H_3$ of the first active material layer 212 in the second region 214 that is normally cold-pressed, resulting in the compaction density of the third portion 212C being less than the compaction density of the first active material layer 212 in the second region 214, a long lithium ion migration distance, and a high risk of lithium deposition. By providing a recess 102 on the third portion 212C, it facilitates the infiltration and storage of the electrolyte, reducing the lithium ion transmission impedance in the third region 215, shortening the lithium ion transmission distance, lowering the risk of lithium deposition on the surface of the third portion 212C, and improving the safety and prolonging service life of the battery. Moreover, $L_2$ being greater than or equal to 1 mm ensures the region where the third portion 212C is provided with the recess 102, which is conducive to lowering the risk of lithium deposition. On the basis that $L_2$ being less than or equal to 7 mm is conducive to lowering the risk of lithium deposition, the impact on the energy density of the secondary battery 100 due to excessive removal of the first active material layer 212 caused by forming the recess 102 is reduced.

In some embodiments, a total area of the recess 102 in 1 mm$^2$ of the third portion 212C is $S_2$, where $0.01$ mm$^2 \leq S_2 \leq 0.15$ mm$^2$. $S_2$ being greater than or equal to 0.01 mm$^2$ ensures the area where the third portion 212C is provided with the recess 102, which is conducive to lowering the risk of lithium deposition. $S_2$ being less than or equal to 0.15 mm$^2$ reduces the impact on the energy density of the secondary battery 100 due to excessive removal of the first active material layer 212 caused by forming the recess 102.

Optionally, $S_2$ may be any one of 0.01 mm$^2$, 0.02 mm$^2$, 0.03 mm$^2$, 0.04 mm$^2$, 0.05 mm$^2$, 0.06 mm$^2$, 0.07 mm$^2$, 0.08 mm$^2$, 0.09 mm$^2$, 0.1 mm$^2$, 0.11 mm$^2$, 0.12 mm$^2$, 0.13 mm$^2$, 0.14 mm$^2$, 0.15 mm$^2$, or a range defined by any two of these values.

In some embodiments, $0.04$ mm$^2 \leq S_2 \leq 0.1$ mm$^2$, further ensuring the area where the third portion 212C is provided with the recess 102, which is conducive to lowering the risk of lithium deposition and further reducing the impact on the energy density of the secondary battery 100.

In some embodiments, along the first direction X, the thickness of the third portion 212C is $H_2$, and a depth of the recess 102 in the third portion 212C is $h_2$, where $1/6 \leq h_2/H_2 \leq 5/6$. $h_2/H_2$ being greater than or equal to 1/6 ensures the depth of the recess 102 in the third portion 212C, which is conducive to lowering the risk of lithium deposition. $h_2/H_2$ being less than or equal to 5/6 reduces the impact on the energy density of the secondary battery 100 due to excessive depth.

In some embodiments, $1/3 \leq h_2/H_2 \leq 2/3$, further ensuring the depth of the recess 102 in the third portion 212C, which is conducive to lowering the risk of lithium deposition and further reducing the impact on the energy density of the secondary battery 100 due to excessive depth.

Optionally, a ratio range of $h_2/H_2$ may be any one of 1/6, 1/3, 1/2, 2/3, 5/6, or a range defined by any two of these values.

In some embodiments, the first active material layer 212 in the second region 214 is also provided with at least one recess 102, a total area of the recess 102 in the first active material layer 212 in 1 mm$^2$ of the second region 214 is $S_3$, and the total area of the recess 102 in 1 mm$^2$ of the first portion 212A is $S_1$, where $0.5 \leq S_1/S_3 \leq 0.95$. $S_1/S_3$ being greater than or equal to 0.5 ensures the area where the recess 102 is provided in the second region 214, which is conducive to lowering the risk of lithium deposition in the second region 214. $S_1/S_3$ being less than or equal to 0.95 reduces the impact on the energy density of the secondary battery 100 due to excessive removal of the first active material layer 212 caused by forming the recess 102.

Optionally, a ratio of $S_1/S_3$ may be any one of 0.5, 0.55, 0.6, 0.65, 0.7, 0.75, 0.8, 0.85, 0.9, 0.95, or a range defined by any two of these values.

In some embodiments, the total area of the recess 102 in 1 mm$^2$ of the third portion 212C is $S_2$, where $0.6 \leq S_2/S_3 \leq 0.85$, further ensuring the area where the recess 102 is provided in the second region 214, which is conducive to lowering the risk of lithium deposition in the second region 214 and further reducing the impact on the energy density of the secondary battery 100 due to excessive removal of the first active material layer 212 caused by forming the recess 102.

In some embodiments, $0.5 \leq S_2/S_3 \leq 0.95$. $S_2/S_3$ being greater than or equal to 0.5 ensures the area where the recess 102 is provided in the second region 214, which is conducive to lowering the risk of lithium deposition. $S_2/S_3$ being less than or equal to 0.95 reduces the impact on the energy density of the secondary battery 100 due to excessive removal of the first active material layer 212 caused by forming the recess 102.

Optionally, a ratio of $S_2/S_3$ may be any one of 0.5, 0.55, 0.6, 0.65, 0.7, 0.75, 0.8, 0.85, 0.9, 0.95, or a range defined by any two of these values.

In some embodiments, $0.6 \leq S_2/S_3 \leq 0.85$, further ensuring the area where the recess 102 is provided in the second region 214, which is conducive to lowering the risk of lithium deposition and further reducing the impact on the energy density of the secondary battery 100 due to excessive removal of the first active material layer 212 caused by forming the recess 102.

In some embodiments, the depth of the recess 102 in the first portion 212A is $h_1$, and the depth of the recess 102 in the second region 214 is $h_3$, where $1.05 \leq h_1/h_3 \leq 1.2$. $h_1/h_3$ being greater than or equal to 1.05 ensures the depth of the recess 102 in the second region 214, which is conducive to lowering the risk of lithium deposition. $h_1/h_3$ being less than or equal to 1.2 reduces the impact on the energy density of the secondary battery 100 due to excessive depth of the recess 102 in the second region 214.

Optionally, a ratio of $h_1/h_3$ may be any one of 1.05, 1.06, 1.07, 1.08, 1.09, 1.1, 1.11, 1.12, 1.13, 1.14, 1.15, 1.16, 1.17, 1.18, 1.19, 1.2, or a range defined by any two of these values.

In some embodiments, $1.1 \leq h_1/h_3 \leq 1.15$, ensuring the depth of the recess 102 in the second region 214, which is further conducive to lowering the risk of lithium deposition and further reducing the impact on the energy density of the secondary battery 100 due to excessive depth of the recess 102 in the second region 214.

In some embodiments, the depth of the recess 102 in the third portion 212C is $h_2$, where $1.1 \leq h_2/h_3 \leq 1.5$. $h_2/h_3$ being greater than or equal to 1.1 ensures the depth of the recess 102 in the second region 214, which is conducive to lowering the risk of lithium deposition. $h_2/h_3$ being less than or equal to 1.5 reduces the impact on the energy density of the secondary battery 100 due to excessive depth of the recess 102 in the second region 214.

Optionally, a ratio of $h_2/h_3$ may be any one of 1.1, 1.2, 1.3, 1.4, 1.5, or a range defined by any two of these values.

In some embodiments, $1.2 \leq h_2/h_3 \leq 1.4$, ensuring the depth of the recess 102 in the second region 214, which is further conducive to lowering the risk of lithium deposition and further reducing the impact on the energy density of the secondary battery 100 due to excessive depth of the recess 102 in the second region 214.

In some embodiments, when the first electrode plate 21 is a negative electrode plate and the first active material layer 212 is a negative electrode active material, the negative electrode active material adopts a negative electrode active material known in the art that can reversibly intercalate and deintercalate active ions, which is not limited in this application. For example, the material may include, but is not limited to, a combination of one or more of graphite, soft carbon, hard carbon, carbon fiber, a meso-carbon microbead, a silicon-based material, a tin-based material, lithium titanate, or other metals or the like that can form an alloy with lithium. Graphite may be selected from a combination of one or more of artificial graphite, natural graphite, and modified graphite. The silicon-based material may be selected from a combination of one or more of elemental silicon, a silicon-oxygen compound, a silicon-carbon composite, and a silicon alloy. The tin-based material may be selected from a combination of one or more of elemental tin, a tin oxide compound, a tin alloy, and the like.

In some embodiments, when the negative electrode active material is a silicon-based system, the sum of the thicknesses of the first section 2111 and the first surface 211A and the second surface 211B of the first section 2111 is $H_4$, where $0.03 \text{ mm} \leq H_4 \leq 0.15 \text{ mm}$.

Optionally, $H_4$ may be any one of 0.03 mm, 0.04 mm, 0.05 mm, 0.06 mm, 0.07 mm, 0.08 mm, 0.09 mm, 0.1 mm, 0.11 mm, 0.12 mm, 0.13 mm, 0.14 mm, 0.15 mm, or a range defined by any two of these values.

In some embodiments, when the negative electrode active material is a graphite system, the sum of the thicknesses of the first section 2111 and the first surface 211A and the second surface 211B of the first section 2111 is $H_5$, where $0.06 \text{ mm} \leq H_5 \leq 0.15 \text{ mm}$.

Optionally, $H_5$ may be any one of 0.06 mm, 0.07 mm, 0.08 mm, 0.09 mm, 0.1 mm, 0.11 mm, 0.12 mm, 0.13 mm, 0.14 mm, 0.15 mm, or a range defined by any two of these values.

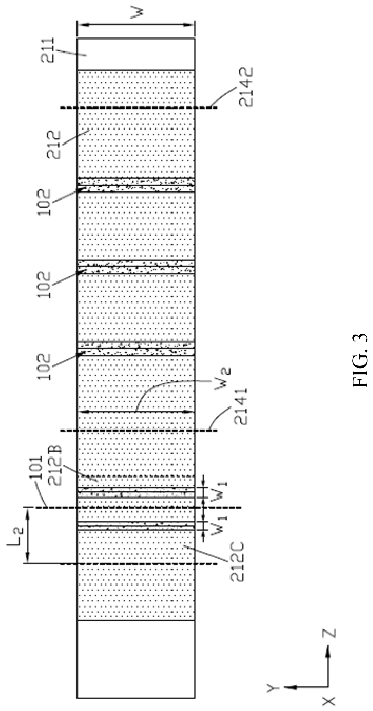

Referring to FIG. 3 to FIG. 5, in some embodiments, a width direction after the first electrode plate 21 is unfolded is defined as a second direction Y, and a length direction after the first electrode plate 21 is unfolded is defined as a third direction Z, the first direction X, the second direction Y, and the third direction Z being perpendicular to each other, and a winding direction S of the electrode assembly 20 being consistent with the third direction Z. The recess 102 extends along the second direction Y, and when viewed along the first direction X, a width of a single recess 102 along the third direction Z is $W_1$, where $20 \text{ μm} \leq W_1 \leq 300 \text{ μm}$. $W_1$ being greater than or equal to 20 μm facilitates the infiltration and storage of the electrolyte and reducing the risk of lithium deposition. $W_1$ being less than or equal to 300 μm reduces the impact on the energy density of the secondary battery 100.

Optionally, $W_1$ may be any one of 20 μm, 30 μm, 40 μm, 50 μm, 60 μm, 70 μm, 80 μm, 90 μm, 100 μm, 110 μm, 120 μm, 130 μm, 140 μm, 150 μm, 160 μm, 170 μm, 180 μm, 190 μm, 200 μm, 210 μm, 220 μm, 230 μm, 240 μm, 250 μm, 260 μm, 270 μm, 280 μm, 290 μm, 300 μm, or a range defined by any two of these values.

In some embodiments, a width of the first active material layer 212 along the second direction Y is W, and a length of a single recess 102 along the second direction Y is $W_2$, where $0.6 \leq W_2/W \leq 1$. $W_2/W$ being greater than or equal to 0.6 facilitates the infiltration and storage of the electrolyte and reducing the risk of lithium deposition. When $W_2/W$ is equal to 1, the recess 102 penetrates the first active material layer 212 along the second direction Y, further facilitating the infiltration and storage of the electrolyte, lowering the risk of lithium deposition.

Optionally, a ratio of $W_2/W$ may be any one of 0.6, 0.7, 0.8, 0.9, 1, or a range defined by any two of these values.

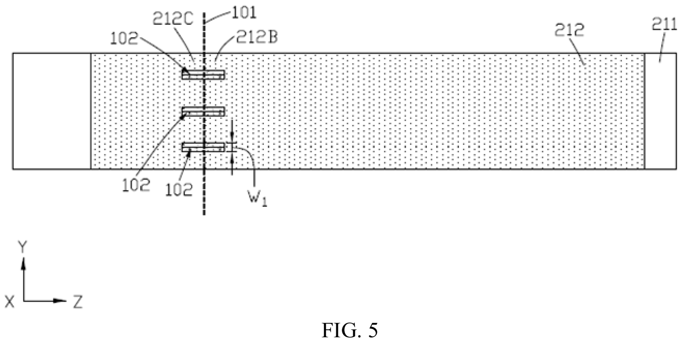

Referring to FIG. 5, in some embodiments, the recess 102 extends along the third direction Z, and when viewed along the first direction X, the width of a single recess 102 along the second direction Y is $W_1$.

In some embodiments, along the first direction X, the width of the recess 102 gradually decreases from the first active material layer 212 toward the first current collector 211, and the width $W_1$ of a single recess 102 refers to the maximum width of the recess 102.

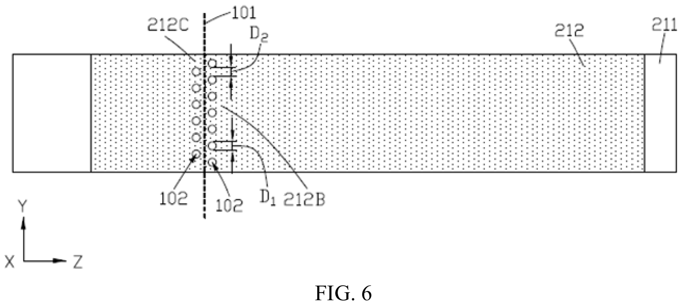

Referring to FIG. 6, when viewed along the first direction X, a single recess 102 is substantially circular, and a diameter of a single recess 102 is $D_1$, where $0.5 \text{ mm} \leq D_1 \leq 3 \text{ mm}$, which is conducive to lowering the risk of lithium deposition. The longest straight line connecting two points on a circumference of the recess 102 and passing through the center of the recess 102 is the diameter.

Optionally, $D_1$ may be any one of 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, or a range defined by any two of these values.

In some embodiments, a plurality of recesses 102 are provided at intervals, and the distance between adjacent

recesses 102 is $D_2$, where 0.5 mm $\leq D_2 \leq$ 3 mm, which is conducive to lowering the risk of lithium deposition.

Optionally, $D_2$ may be any one of 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, or a range defined by any two of these values.

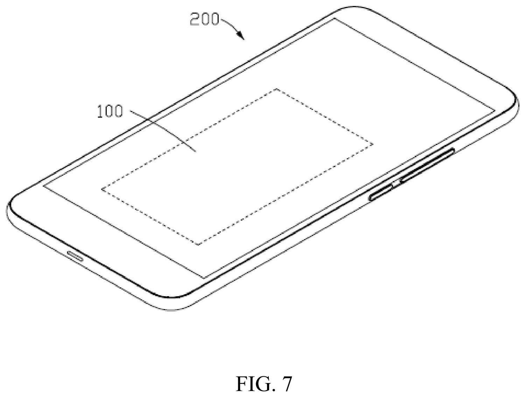

Referring to FIG. 7, one embodiment of this application further provides an electronic device 200, where the electronic device 200 includes the above secondary battery 100. The secondary battery 100 of this application is suitable for electronic devices 200 in various fields. The electronic device 200 is powered by the above secondary battery 100, and the lithium deposition situation of the electrode assembly 20 is mitigated, so the secondary battery 100 has higher safety and longer cycle life. In one embodiment, the electronic device 200 of this application may be, but is not limited to, an electronic device, a drone, a backup power source, an electric vehicle, an electric motorcycle, an electric motor bicycle, an electric tool, and a large household battery module.

Specific examples and comparative examples below are used to describe this application in detail. This application is described by using an example in which the secondary battery 100 is a wound lithium-ion secondary battery, the first electrode plate 21 is a negative electrode plate, and the second electrode plate 22 is a positive electrode plate and with reference to specific preparation procedures and test methods. Persons skilled in the art should understand that a preparation method described in this application is only an example, and that all other suitable preparation methods fall within the scope of this application.

Example 1

(1) Preparation of positive electrode plate: Positive electrode active material lithium cobalt oxide (LiCoO$_2$), conductive carbon black (Super P), and polyvinylidene fluoride (PVDF) were mixed at a mass ratio of 97.6:1:1.4, then N-methylpyrrolidone (NMP) was added as a solvent to obtain a slurry with a solid content of 71.5wt%, and the slurry was stirred to uniformity. Polystyrene foam was pre-applied to a portion of a surface of a positive electrode current collector, that is, aluminum foil with a thickness of 8 $\mu$m, the slurry was uniformly applied to one side surface of the aluminum foil, heating was performed to cause the polystyrene foam to fall off to expose a portion of the surface of the aluminum foil, and the above product was dried at 90°C. The above coating steps were repeated on another side surface of the aluminum foil to obtain a double-side coated positive electrode plate. The initial positive electrode plate was cold-pressed to obtain a positive electrode active material layer with a single-layer coating thickness of 44 $\mu$m. Then, processes such as cutting were performed to obtain a positive electrode plate. A first electrode tab was welded on the exposed aluminum foil, and the material of the first electrode tab was aluminum.

(2) Preparation of negative electrode plate: A negative electrode active material artificial graphite, conductive carbon black (Super P), sodium carboxymethyl cellulose (CMC), and styrene-butadiene rubber (SBR) were mixed at a mass ratio of 98:0.8:0.7:0.5, added with deionized water as a solvent to obtain a slurry with a weight percentage of 50wt%, and the slurry was stirred to uniformity. The slurry was uniformly applied to a first surface and a second surface of the negative electrode current collector, that is, copper foil with a thickness of 5 $\mu$m, to obtain a double-side coated negative electrode plate. The initial negative electrode plate was rolled to obtain a negative electrode active material layer with a coating thickness of 54 $\mu$m. Then, laser grooving was performed in a single-double side boundary region of the electrode plate to remove part of the active material. At the same time, laser cleaning was performed at a specific position in the middle of the electrode plate to remove part of the active material. A second electrode tab was welded on the exposed copper foil, and the material of the second electrode tab was nickel.

(3) Preparation of electrolyte: In a dry argon atmosphere, first, organic solvents ethylene carbonate (EC), ethyl methyl carbonate (EMC), and diethyl carbonate (DEC) were mixed at a mass ratio of EC:EMC:DEC = 30:50:20, and then lithium salt lithium hexafluorophosphate (LiPF$_6$) was added into the organic solvent for dissolving and mixing to uniformity, to obtain an electrolyte with a concentration of the lithium salt being 1.15 mol/L.

(4) Preparation of separator: A polyethylene (PE) film with a thickness of 5 $\mu$m was selected.

(5) Preparation of secondary battery: The first electrode plate, the separator, and the second electrode plate were sequentially stacked and wound to obtain the electrode assembly shown in FIG. 1, and the punched aluminum-plastic film (thickness of 150 $\mu$m) was placed in the assembly fixture with a pit surface facing up, and the electrode assembly was placed in the pit. Then, the electrolyte was injected into the pit of the aluminum-plastic film, and the first electrode tab and the second electrode tab were led out of the aluminum-plastic film and then packaged and formed to obtain a secondary battery.

Comparative Example 1

The difference from Example 1 was that no recess was provided in the first portion in Comparative Example 1.

Comparative Example 2 and Comparative Example 3

The difference from Example 1 was that the recess was not provided in the first section in Comparative Example 2 and Comparative Example 3.

Example 2 to Example 63

The difference from Example 1 was the position where the recess was provided, and values of $L_1$, $L_2$, $S_1$, $S_2$, and the like. The specific differences were listed in Table 1. Other parameters were the same as those in Example 1 except for the differences listed in Table 1.

Then, 50 secondary batteries from each of the examples and comparative examples were taken for lithium deposition test and volumetric energy density test, and the test results were recorded in Table 1. The area and depth of the recess, and the thickness of the first active material were measured using scanning electron microscope SEM.

Lithium deposition test method: (1) The test temperature was maintained at 25°C, and the secondary battery 100 was left standing for 30 min; (2) the secondary battery 100 was discharged to 3 V at a constant current of 0.5C; (3) the secondary battery 100 was left standing for 10 min; (4) the secondary battery 100 was charged to 4.5 V at a constant current of 1.2C, and charged at a constant voltage to 0.05C; (5) the secondary battery 100 was left standing for 10 min; (6) steps 2 to 5 were repeated for 100 times; and (7) the secondary battery 100 was disassembled to observe whether lithium deposition occurred on the negative electrode plate. The number of secondary batteries 100 with lithium deposition on the negative electrode plate in each group was counted. If the number of secondary batteries 100 with lithium deposition on the negative electrode plate in that group experiment was N, and the lithium deposition occurrence rate of the secondary batteries 100 in that group experiment was N/50.

Volumetric energy density test method: 1) Under the environmental condition of 25°C, the secondary battery was left standing for 30 min, discharged to 3.0 V at a constant current of 0.2C, and left standing for 10 min; the secondary battery was charged to 4.5 V at a constant current of 0.2C, charged at a constant voltage to 0.05C, and left standing for 10 min; and the secondary battery was discharged to 3 V at a constant current of 0.2C, left standing for 10 min, and the discharge capacity $C_0$ was recorded; 2) a thickness of a battery cell was measured using a 1400g PPG, and a length and a width of the battery cell were measured using a CCD; and 3) the calculation was performed using the following formula: volumetric energy density = platform voltage $\times$ $C_0$ / volume of the secondary battery.

**Table 1**

| | $L_1$ | $L_2$ | First portion | Second portion | Third portion | Second region | $S_1$ | $S_2$ | $h_1/H_1$ | $h_2/H_2$ | $S_3/S_1$ | $S_3/S_2$ | $h_1/h_3$ | $h_2/h_3$ | Lithium deposition rate in single-double side boundary region | Lithium deposition rate in second region | Energy density (Wh/L) |
|---|---|---|---|---|---|---|---|---|---|---|---|---|---|---|---|---|---|
| Comparative Example 1 | 2 | 4 | No re-cess | No re-cess | No re-cess | With re-cess | / | / | / | / | / | / | / | / | 40/50 | 8/50 | 809.7 |
| Comparative Example 2 | 0.4 | 4 | With recess | No re-cess | No re-cess | With re-cess | 0.07 | / | 1/2 | / | 0.75 | / | 1.12 | / | 32/50 | 9/50 | 806.2 |
| Comparative Example 3 | 6 | 4 | With recess | No re-cess | No re-cess | With re-cess | 0.07 | / | 1/2 | / | 0.75 | / | 1.12 | / | 7/50 | 8/50 | 801.4 |
| Example 1 | 2 | 4 | With recess | No re-cess | No re-cess | With re-cess | 0.07 | / | 1/2 | / | 0.75 | / | 1.12 | / | *15/50* | 10/50 | 804.8 |
| Example 2 | 0.5 | 4 | With recess | No re-cess | No re-cess | With re-cess | 0.07 | / | 1/2 | / | 0.75 | / | 1.12 | / | 27/50 | 9/50 | 806.0 |
| Example 3 | 3 | 4 | With recess | No re-cess | No re-cess | With re-cess | 0.07 | / | 1/2 | / | 0.75 | / | 1.12 | / | 10/50 | 9/50 | 803.7 |
| Example 4 | 5 | 4 | With recess | No re-cess | No re-cess | With re-cess | 0.07 | / | 1/2 | / | 0.75 | / | 1.12 | / | 8/50 | 8/50 | 802.3 |
| Example 5 | 2 | 4 | With recess | With re-cess | No re-cess | With re-cess | 0.07 | / | 1/2 | / | 0.75 | / | 1.12 | / | 10/50 | 10/50 | 804.0 |
| Example 6 | 0.5 | 4 | With recess | With re-cess | No re-cess | With re-cess | 0.07 | / | 1/2 | / | 0.75 | / | 1.12 | / | 22/50 | 9/50 | 805.2 |
| Example 7 | 3 | 4 | With recess | With re-cess | No re-cess | With re-cess | 0.07 | / | 1/2 | / | 0.75 | / | 1.12 | / | 7/50 | 8/50 | 802.9 |
| Example 8 | 5 | 4 | With recess | With re-cess | No re-cess | With re-cess | 0.07 | / | 1/2 | / | 0.75 | / | 1.12 | / | *5/50* | 8/50 | 801.6 |
| Example 9 | 2 | 4 | With recess | With re-cess | With recess | With re-cess | 0.07 | 0.07 | 1/2 | 1/2 | 0.75 | 0.75 | 1.12 | 1.3 | 6/50 | 8/50 | 802.0 |

EP 4 760 795 A2

(continued)

| | $L_1$ | $L_2$ | First portion | Second portion | Third portion | Second region | $S_1$ | $S_2$ | $h_1/H_1$ | $h_2/H_2$ | $S_3/S_1$ | $S_3/S_2$ | $h_1/h_3$ | $h_2/h_3$ | Lithium deposition rate in single-double side boundary region | Lithium deposition rate in second region | Energy density (Wh/L) |
|---|---|---|---|---|---|---|---|---|---|---|---|---|---|---|---|---|---|
| Example 10 | 2 | 0.5 | With recess | With recess | With recess | With recess | 0.07 | 0.07 | 1/2 | 1/2 | 0.75 | 0.75 | 1.12 | 1.3 | 9/50 | 9/50 | 803.5 |
| Example 11 | 2 | 1 | With recess | With recess | With recess | With recess | 0.07 | 0.07 | 1/2 | 1/2 | 0.75 | 0.75 | 1.12 | 1.3 | 8/50 | 10/50 | 803.0 |
| Example 12 | 2 | 3 | With recess | With recess | With recess | With recess | 0.07 | 0.07 | 1/2 | 1/2 | 0.75 | 0.75 | 1.12 | 1.3 | 7/50 | 10/50 | 802.3 |
| Example 13 | 2 | 5 | With recess | With recess | With recess | With recess | 0.07 | 0.07 | 1/2 | 1/2 | 0.75 | 0.75 | 1.12 | 1.3 | 3/50 | 8/50 | 801.5 |
| Example 14 | 2 | 7 | With recess | With recess | With recess | With recess | 0.07 | 0.07 | 1/2 | 1/2 | 0.75 | 0.75 | 1.12 | 1.3 | 2/50 | 9/50 | 800.7 |
| Example 15 | 2 | 8 | With recess | With recess | With recess | With recess | 0.07 | 0.07 | 1/2 | 1/2 | 0.75 | 0.75 | 1.12 | 1.3 | 1/50 | 9/50 | 800.1 |
| Example 16 | 2 | 4 | With recess | No recess | No recess | With recess | 0.009 | / | 1/2 | / | 0.75 | / | 1.12 | / | 21/50 | 8/50 | 805.5 |
| Example 17 | 2 | 4 | With recess | No recess | No recess | With recess | 0.01 | / | 1/2 | / | 0.75 | / | 1.12 | / | 20/50 | 9/50 | 805.4 |
| Example 18 | 2 | 4 | With recess | No recess | No recess | With recess | 0.04 | / | 1/2 | / | 0.75 | / | 1.12 | / | 18/50 | 9/50 | 805.3 |
| Example 19 | 2 | 4 | With recess | No recess | No recess | With recess | 0.1 | / | 1/2 | / | 0.75 | / | 1.12 | / | 12/50 | 10/50 | 804.5 |
| Example 20 | 2 | 4 | With recess | No recess | No recess | With recess | *0.15* | / | 1/2 | / | 0.75 | / | 1.12 | / | 9/50 | 8/50 | 803.5 |
| Example 21 | 2 | 4 | With recess | No recess | No recess | With recess | 0.16 | / | 1/2 | / | 0.75 | / | 1.12 | / | 7/50 | 8/50 | 803.1 |

(continued)

| | $L_1$ | $L_2$ | First portion | Second portion | Third portion | Second region | $S_1$ | $S_2$ | $h_1/H_1$ | $h_2/H_2$ | $S_3/S_1$ | $S_3/S_2$ | $h_1/h_3$ | $h_2/h_3$ | Lithium deposition rate in single-double side boundary region | Lithium deposition rate in second region | Energy density (Wh/L) |
|---|---|---|---|---|---|---|---|---|---|---|---|---|---|---|---|---|---|
| Example 22 | 2 | 4 | With recess | With recess | With recess | With recess | 0.07 | 0.009 | 1/2 | 1/2 | 0.75 | 0.75 | 1.12 | 1.3 | 10/50 | 9/50 | 802.7 |
| Example 23 | 2 | 4 | With recess | With recess | With recess | With recess | 0.07 | 0.01 | 1/2 | 1/2 | 0.75 | 0.75 | 1.12 | 1.3 | 8/50 | 8/50 | 802.6 |
| Example 24 | 2 | 4 | With recess | With recess | With recess | With recess | 0.07 | 0.04 | 1/2 | 1/2 | 0.75 | 0.75 | 1.12 | 1.3 | 7/50 | 10/50 | 802.5 |
| Example 25 | 2 | 4 | With recess | With recess | With recess | With recess | 0.07 | 0.1 | 1/2 | 1/2 | 0.75 | 0.75 | 1.12 | 1.3 | 4/50 | 9/50 | 801.8 |
| Example 26 | 2 | 4 | With recess | With recess | With recess | With recess | 0.07 | 0.15 | 1/2 | 1/2 | 0.75 | 0.75 | 1.12 | 1.3 | 3/50 | 8/50 | 800.8 |
| Example 27 | 2 | 4 | With recess | With recess | With recess | With recess | 0.07 | 0.16 | 1/2 | 1/2 | 0.75 | 0.75 | 1.12 | 1.3 | 2/50 | 8/50 | 800.4 |
| Example 28 | 2 | 4 | With recess | No recess | No recess | With recess | 0.07 | / | 1/7 | / | 0.75 | / | 1.12 | / | 26/50 | 9/50 | 806.0 |
| Example 29 | 2 | 4 | With recess | No recess | No recess | With recess | 0.07 | / | 1/6 | / | 0.75 | / | 1.12 | / | 19/50 | 9/50 | 805.8 |
| Example 30 | 2 | 4 | With recess | No recess | No recess | With recess | 0.07 | / | 1/3 | / | 0.75 | / | 1.12 | / | 17/50 | 10/50 | 805.3 |
| Example 31 | 2 | 4 | With recess | No recess | No recess | With recess | 0.07 | / | 2/3 | / | 0.75 | / | 1.12 | / | 10/50 | 8/50 | 803.5 |
| Example 32 | 2 | 4 | With recess | No recess | No recess | With recess | 0.07 | / | 5/6 | / | 0.75 | / | 1.12 | / | 8/50 | 8/50 | 801.7 |
| Example 33 | 2 | 4 | With recess | No recess | No recess | With recess | 0.07 | / | 6/7 | / | 0.75 | / | 1.12 | / | 5/50 | 7/50 | 800.1 |

(continued)

| | $L_1$ | $L_2$ | First portion | Second portion | Third portion | Second region | $S_1$ | $S_2$ | $h_1/H_1$ | $h_2/H_2$ | $S_3/S_1$ | $S_3/S_2$ | $h_1/h_3$ | $h_2/h_3$ | Lithium deposition rate in single-double side boundary region | Lithium deposition rate in second region | Energy density (Wh/L) |
|---|---|---|---|---|---|---|---|---|---|---|---|---|---|---|---|---|---|
| Example 34 | 2 | 4 | With recess | With recess | With recess | With recess | 0.07 | 0.07 | 1/2 | 1/7 | 0.75 | 0.75 | 1.12 | 1.3 | 9/50 | 8/50 | 803.9 |
| Example 35 | 2 | 4 | With recess | With recess | With recess | With recess | 0.07 | 0.07 | 1/2 | 1/6 | 0.75 | 0.75 | 1.12 | 1.3 | 8/50 | 9/50 | 803.4 |
| Example 36 | 2 | 4 | With recess | With recess | With recess | With recess | 0.07 | 0.07 | 1/2 | 1/3 | 0.75 | 0.75 | 1.12 | 1.3 | 7/50 | 8/50 | 802.8 |
| Example 37 | 2 | 4 | With recess | With recess | With recess | With recess | 0.07 | 0.07 | 1/2 | 2/3 | 0.75 | 0.75 | 1.12 | 1.3 | 4/50 | 8/50 | 801.2 |
| Example 38 | 2 | 4 | With recess | With recess | With recess | With recess | 0.07 | 0.07 | 1/2 | 5/6 | 0.75 | 0.75 | 1.12 | 1.3 | 3/50 | 9/50 | 800.7 |
| Example 39 | 2 | 4 | With recess | With recess | With recess | With recess | 0.07 | 0.07 | 1/2 | 6/7 | 0.75 | 0.75 | 1.12 | 1.3 | 1/50 | 10/50 | 800.2 |
| Example 40 | 2 | 4 | With recess | No recess | No recess | With recess | 0.07 | / | 1/2 | / | 0.4 | / | 1.12 | / | 15/50 | 19/50 | 806.6 |
| Example 41 | 2 | 4 | With recess | No recess | No recess | With recess | 0.07 | / | 1/2 | / | 0.5 | / | 1.12 | / | 16/50 | 15/50 | 806.2 |
| Example 42 | 2 | 4 | With recess | No recess | No recess | With recess | 0.07 | / | 1/2 | / | 0.6 | / | 1.12 | / | 15/50 | 12/50 | 805.5 |
| Example 43 | 2 | 4 | With recess | No recess | No recess | With recess | 0.07 | / | 1/2 | / | 0.85 | / | 1.12 | / | 15/50 | 6/50 | 804.3 |
| Example 44 | 2 | 4 | With recess | No recess | No recess | With recess | 0.07 | / | 1/2 | / | 0.95 | / | 1.12 | / | 14/50 | 3/50 | 803.2 |
| Example 45 | 2 | 4 | With recess | No recess | No recess | With recess | 0.07 | / | 1/2 | / | 1 | / | 1.12 | / | 15/50 | 3/50 | 802.8 |

| | $L_1$ | $L_2$ | First portion | Second portion | Third portion | Second region | $S_1$ | $S_2$ | $h_1/H_1$ | $h_2/H_2$ | $S_3/S_1$ | $S_3/S_2$ | $h_1/h_3$ | $h_2/h_3$ | Lithium deposition rate in single-double side boundary region | Lithium deposition rate in second region | Energy density (Wh/L) |
|---|---|---|---|---|---|---|---|---|---|---|---|---|---|---|---|---|---|
| Example 46 | 2 | 4 | With recess | With recess | With recess | With recess | 0.07 | 0.07 | 1/2 | 1/2 | 0.75 | 0.4 | 1.12 | 1.3 | 7/50 | 20/50 | 804.9 |
| Example 47 | 2 | 4 | With recess | With recess | With recess | With recess | 0.07 | 0.07 | 1/2 | 1/2 | 0.75 | 0.5 | 1.12 | 1.3 | 6/50 | 14/50 | 803.8 |
| Example 48 | 2 | 4 | With recess | With recess | With recess | With recess | 0.07 | 0.07 | 1/2 | 1/2 | 0.75 | 0.6 | 1.12 | 1.3 | 6/50 | 12/50 | 802.7 |
| Example 49 | 2 | 4 | With recess | With recess | With recess | With recess | 0.07 | 0.07 | 1/2 | 1/2 | 0.75 | 0.85 | 1.12 | 1.3 | 5/50 | 5/50 | 801.4 |
| Example 50 | 2 | 4 | With recess | With recess | With recess | With recess | 0.07 | 0.07 | 1/2 | 1/2 | 0.75 | 0.95 | 1.12 | 1.3 | 6/50 | 3/50 | 800.8 |
| Example 51 | 2 | 4 | With recess | With recess | With recess | With recess | 0.07 | 0.07 | 1/2 | 1/2 | 0.75 | 1 | 1.12 | 1.3 | 6/50 | 2/50 | 800.2 |
| Example 52 | 2 | 4 | With recess | No recess | No recess | With recess | 0.07 | / | 1/2 | / | 0.75 | / | 1 | / | 15/50 | 2/50 | 801.6 |
| Example 53 | 2 | 4 | With recess | No recess | No recess | With recess | 0.07 | / | 1/2 | / | 0.75 | / | 1.05 | / | 14/50 | 3/50 | 802.7 |
| Example 54 | 2 | 4 | With recess | No recess | No recess | With recess | 0.07 | / | 1/2 | / | 0.75 | / | 1.1 | / | 15/50 | 5/50 | 803.6 |
| Example 55 | 2 | 4 | With recess | No recess | No recess | With recess | 0.07 | / | 1/2 | / | 0.75 | / | 1.15 | / | 15/50 | 12/50 | 805.6 |
| Example 56 | 2 | 4 | With recess | No recess | No recess | With recess | 0.07 | / | 1/2 | / | 0.75 | / | 1.2 | / | 14/50 | 14/50 | 806.4 |
| Example 57 | 2 | 4 | With recess | No recess | No recess | With recess | 0.07 | / | 1/2 | / | 0.75 | / | 1.3 | / | 15/50 | 18/50 | 806.9 |

EP 4 760 795 A2

16

| | $L_1$ | $L_2$ | First portion | Second portion | Third portion | Second region | $S_1$ | $S_2$ | $h_1/H_1$ | $h_2/H_2$ | $S_3/S_1$ | $S_3/S_2$ | $h_1/h_3$ | $h_2/h_3$ | Lithium deposition rate in single-double side boundary region | Lithium deposition rate in second region | Energy density (Wh/L) |
|---|---|---|---|---|---|---|---|---|---|---|---|---|---|---|---|---|---|
| Example 58 | 2 | 4 | With recess | With recess | With recess | With recess | 0.07 | 0.07 | 1/2 | 1/2 | 0.75 | 0.75 | 1.12 | 1.05 | 7/50 | 3/50 | 800.5 |
| Example 59 | 2 | 4 | With recess | With recess | With recess | With recess | 0.07 | 0.07 | 1/2 | 1/2 | 0.75 | 0.75 | 1.12 | 1.1 | 6/50 | 5/50 | 801.2 |
| Example 60 | 2 | 4 | With recess | With recess | With recess | With recess | 0.07 | 0.07 | 1/2 | 1/2 | 0.75 | 0.75 | 1.12 | 1.2 | 6/50 | 6/50 | 801.7 |
| Example 61 | 2 | 4 | With recess | With recess | With recess | With recess | 0.07 | 0.07 | 1/2 | 1/2 | 0.75 | 0.75 | 1.12 | 1.4 | 7/50 | 13/50 | 802.6 |
| Example 62 | 2 | 4 | With recess | With recess | With recess | With recess | 0.07 | 0.07 | 1/2 | 1/2 | 0.75 | 0.75 | 1.12 | 1.5 | 6/50 | 16/50 | 803.4 |
| Example 63 | 2 | 4 | With recess | With recess | With recess | With recess | 0.07 | 0.07 | 1/2 | 1/2 | 0.75 | 0.75 | 1.12 | 1.6 | 7/50 | 19/50 | 803.9 |

It can be learned from Comparative Example 1 and Comparative Example 2, Comparative Example 3, and Example 1 to Example 63 in Table 1 that providing a recess in the first portion is conducive to lowering the risk of lithium deposition in the boundary region between the single-side coated region and the double-side coated region.

It can be learned from Comparative Example 1 to Comparative Example 3 and Example 1 to Example 4 in Table 1 that the first region is in the range of $0.5\,mm \leq L_1 \leq 5\,mm$, which is conducive to lowering the risk of lithium deposition in the boundary region between the single-side coated region and the double-side coated region, while also maintaining a relatively high volumetric energy density. Further, preferably $0.5\,mm \leq L_1 \leq 3\,mm$.

It can be learned from Example 1, Example 5, and Example 9 in Table 1 that compared to Example 1, in Example 5, recesses are provided in both the first portion and the second portion, the volumetric energy density is slightly decreased, further lowering the risk of lithium deposition in the boundary region between the single-side coated region and the double-side coated region. Compared to Example 5, in Example 9, recesses are provided in the first portion, the second portion, and the third portion, the volumetric energy density is slightly decreased, further lowering the risk of lithium deposition in the boundary region between the single-side coated region and the double-side coated region.

It can be learned from Example 9 to Example 15 in Table 1 that the third region is in the range of $1\,mm \leq L_2 \leq 7\,mm$, which is conducive to lowering the risk of lithium deposition in the boundary region between the single-side coated region and the double-side coated region, while also maintaining a relatively high volumetric energy density.

It can be learned from Example 1 and Example 16 to Example 21 in Table 1 that the total area of the recess in 1 $mm^2$ of the first portion is in the range of $0.01\,mm^2 \leq S_1 \leq 0.15\,mm^2$, which is conducive to lowering the risk of lithium deposition in the boundary region between the single-side coated region and the double-side coated region, while also maintaining a relatively high volumetric energy density.

It can be learned from Example 9 and Example 22 to Example 27 in Table 1 that the total area of the recess in 1 $mm^2$ of the third portion is in the range of $0.01\,mm^2 \leq S_2 \leq 0.15\,mm^2$, which is conducive to lowering the risk of lithium deposition in the boundary region between the single-side coated region and the double-side coated region, while also maintaining a relatively high volumetric energy density.

It can be learned from Example 1 and Example 28 to Example 33 in Table 1 that the ratio of the thickness of the first portion to the depth of the recess in the first portion satisfies $1/6 \leq h_1/H_1 \leq 5/6$, which is conducive to lowering the risk of lithium deposition in the boundary region between the single-side coated region and the double-side coated region, while also maintaining a relatively high volumetric energy density. Further, preferably $1/3 \leq h_1/H_1 \leq 2/3$.

It can be learned from Example 9 and Example 34 to Example 39 in Table 1 that the ratio of the thickness of the third portion to the depth of the recess in the third portion satisfies $1/6 \leq h_2/H_2 \leq 5/6$, which is conducive to lowering the risk of lithium deposition in the boundary region between the single-side coated region and the double-side coated region, while also maintaining a relatively high volumetric energy density. Further, preferably $1/3 \leq h_2/H_2 \leq 2/3$.

It can be learned from Example 1 and Example 40 to Example 45 in Table 1 that the ratio of the total area of the recess in 1 $mm^2$ of the first portion to the total area of the recess in the first active material layer in 1 $mm^2$ of the second region satisfies $0.5 \leq S_1/S_3 \leq 0.95$, which is conducive to lowering the risk of lithium deposition in the second region, while also maintaining a relatively high volumetric energy density. When $S_1/S_3 < 0.5$, the kinetics in the second region is poor, and the risk of lithium deposition in the second region is high; and when $S_1/S_3 > 0.95$, such a large area of grooving is not needed in the second region, resulting in energy density loss. Further, preferably $0.6 \leq S_1/S_3 \leq 0.85$.

It can be learned from Example 9 and Example 46 to Example 51 in Table 1 that the ratio of the total area of the recess in 1 $mm^2$ of the third portion to the total area of the recess in the first active material layer in 1 $mm^2$ of the second region satisfies $0.5 \leq S_2/S_3 \leq 0.95$, which is conducive to lowering the risk of lithium deposition in the second region, while also maintaining a relatively high volumetric energy density. When $S_2/S_3 < 0.5$, the kinetics in the second region is poor, and the risk of lithium deposition in the second region is high; and when $S_2/S_3 > 0.95$, such a large area of grooving is not needed in the second region, resulting in energy density loss. Further, preferably $0.6 \leq S_2/S_3 \leq 0.85$.

It can be learned from Example 1 and Example 52 to Example 57 in Table 1 that the ratio of the depth of the recess in the first portion to the depth of the recess in the second region satisfies $1.05 \leq h_1/h_3 \leq 1.2$, which is conducive to lowering the risk of lithium deposition in the second region, while also maintaining a relatively high volumetric energy density. Further, preferably $1.1 \leq h_1/h_3 \leq 1.15$.

It can be learned from Example 9 and Example 58 to Example 63 in Table 1 that the ratio of the depth of the recess in the third portion to the depth of the recess in the second region satisfies $1.1 \leq h_2/h_3 \leq 1.5$, which is conducive to lowering the risk of lithium deposition in the second region, while also maintaining a relatively high volumetric energy density. Further, preferably $1.2 \leq h_2/h_3 \leq 1.4$.

Those of ordinary skill in the art should appreciate that the foregoing embodiments are for description of this application only but not for limiting this application. Appropriate modifications and variations made to the foregoing embodiments without departing from the essential spirit and scope of this application all fall within the scope of this application.

**Claims**

1. A secondary battery (100), comprising:

an electrode assembly (20), the electrode assembly (20) having a wound structure, and the electrode assembly (20) comprises a first electrode plate (21);

the first electrode plate (21) comprises a first current collector (211) and a first active material layer (212) provided on the first current collector (211); and along a first direction (X), the first current collector (211) comprising a first surface (211A) and a second surface (211B); wherein the first direction (X) is a thickness direction of the first electrode plate (21);

the first current collector (211) comprises a first section (2111) and a second section (2112) sequentially provided along a winding direction (S) of the electrode assembly (20); wherein the first surface (211A) of the first section (2111) and the second surface (211B) of the first section (2111) are both provided with the first active material layer (212); the second surface (211B) of the second section (2112) is provided with the first active material layer (212), the first surface (211A) of the second section (2112) is not provided with any active material layer; wherein,

a position where the first section (2111) and the second section (2112) meet is defined as a boundary line (101); a part of the first electrode plate (21) corresponding to the first section (2111) comprises a first region (213), the first region (213) being a region extending by a distance $L_1$ from the boundary line (101) along a direction from the second section (2112) toward the first section (2111), and $0.5 \text{ mm} \leq L_1 \leq 5 \text{ mm}$;

the first current collector (211) in the first region (213) is a first sub-section (2111A); the first active material layer (212) on the first surface (211A) of the first sub-section (2111A) is a first portion (212A); at least one recess (102) is provided on the first portion (212A), and the at least one recess (102) being formed on a surface of the first portion (212A) facing away from the first sub-section (2111A) and recessed toward the first sub-section (2111A); and preferably,

the first electrode plate (21) is a negative electrode plate.

2. The secondary battery (100) according to claim 1, wherein the first active material layer (212) on the second surface (211B) of the first sub-section (2111A) is a second portion (212B); at least one recess (102) is provided on the second portion (212B), and the at least one recess (102) in the second portion (212B) formed on the surface of the second portion (212B) facing away from the first sub-section (2111A) and recessed toward the first sub-section (2111A).

3. The secondary battery (100) according to claim 1, wherein the part of the first electrode plate (21) corresponding to the first section (2111) further comprises a second region (214); and the second region (214) comprises a first edge (2141) and a second edge (2142) arranged oppositely along the winding direction (S) of the electrode assembly (20); along the winding direction (S) of the electrode assembly (20), a distance from the first edge (2141) to the boundary line (101) is 20 mm, and a distance from the second edge (2142) to an end edge of the electrode assembly (20) is 20 mm; and the first region (213) satisfies at least one of the following:

(a) $0.5 \text{ mm} \leq L_1 \leq 3 \text{ mm}$;
(b) along the first direction (X), a thickness of the first portion (212A) is $H_1$, and a thickness of a single layer of the first active material layer (212) in the second region (214) is $H_3$, wherein $1.05 \leq H_1/H_3 \leq 1.2$; or
(c) a compaction density of the first portion (212A) is $\rho_1$, and a compaction density of the first active material layer (212) in the second region (214) is $\rho_3$, wherein $1.05 \leq \rho_1/\rho_3 \leq 1.2$.

4. The secondary battery (100) according to claim 1 or 2, wherein the first electrode plate (21) corresponding to the second section (2112) comprises a third region (215), the third region (215) being a region extending a distance $L_2$ from the boundary line (101) along a direction from the first section (2111) toward the second section (2112), and $1 \text{ mm} \leq L_2 \leq 7 \text{ mm}$; and the first active material layer (212) in the third region (215) is a third portion (212C); at least one recess (102) is provided on the third portion (212C), and the at least one recess (102) in the third portion (212C) is formed on the surface of the third portion (212C) facing away from the second section (2112) and recessed toward the second section (2112).

5. The secondary battery (100) according to claim 4, wherein the part of the first electrode plate (21) corresponding to the first section (2111) further comprises a second region (214); and along the winding direction (S) of the electrode assembly (20), the second region (214) comprises a first edge (2141) and a second edge (2142); along the winding direction (S) of the electrode assembly (20), a distance from the first edge (2141) to the boundary line (101) is 20 mm, and a distance from the second edge (2142) to an end edge of the electrode assembly (20) is 20 mm; and the third region (215) satisfies at least one of the following:

(a) along the first direction (X), a thickness of the third portion (212C) is $H_2$, and a thickness of a single layer of the first active material layer (212) in the second region (214) is $H_3$, wherein $1.1 \leq H_2/H_3 \leq 1.5$; or
(b) a compaction density of the third portion (212C) is $\rho_2$, and a compaction density of the first active material layer (212) in the second region (214) is $\rho_3$, wherein $0.65 \leq \rho_2/\rho_3 \leq 0.95$.

6. The secondary battery (100) according to claim 1, wherein a total recessed area in 1 $mm^2$ of the first portion (212A) is $S_1$, 0.01 $mm^2 \leq S_1 \leq 0.15$ $mm^2$; and preferably, 0.04 $mm^2 \leq S_1 \leq 0.1$ $mm^2$.

7. The secondary battery (100) according to claim 4, wherein a total recessed area in 1 $mm^2$ of the third portion (212C) is $S_2$, 0.01 $mm^2 \leq S_2 \leq 0.15$ $mm^2$; and preferably, 0.04 $mm^2 \leq S_2 \leq 0.1$ $mm^2$.

8. The secondary battery (100) according to claim 1, wherein along the first direction (X), a thickness of the first portion (212A) is $H_1$, a depth of each recess (102) in the first portion (212A) is $h_1$, $1/6 \leq h_1/H_1 \leq 5/6$; and preferably, $1/3 \leq h_1/H_1 \leq 2/3$.

9. The secondary battery (100) according to claim 4, wherein along the first direction (X), a thickness of the third portion (212C) is $H_2$, a depth of each recess (102) in the third portion (212C) is $h_2$, $1/6 \leq h_2/H_2 \leq 5/6$; and preferably, $1/3 \leq h_2/H_2 \leq 2/3$.

10. The secondary battery (100) according to claim 4, wherein the part of the first electrode plate (21) corresponding to the first section (2111) further comprises a second region (214); and along the winding direction (S) of the electrode assembly (20), the second region (214) comprises a first edge (2141) and a second edge (2142); along the winding direction(S) of the electrode assembly (20), a distance from the first edge (2141) to the boundary line (101) is 20 mm, and a distance from the second edge (2142) to an end edge of the electrode assembly (20) is 20 mm; and the first active material layer (212) in the second region (214) is also provided with at least one recess (102); a total recessed area in the first active material layer (212) in 1 $mm^2$ of the second region (214) is $S_3$; a total recessed area in 1 $mm^2$ of the first portion (212A) is $S_1$; a total recessed area in 1 $mm^2$ of the third portion (212C) is $S_2$; a depth of each recess (102) in the first portion (212A) is $h_1$; a depth of each recess (102) in the third portion (212C) is $h_2$; along the first direction (X), a thickness of a single layer of the first active material layer (212) in the second region (214) is $H_3$; a depth of each recess (102) in the second region (214) is $h_3$; and $S_1$ or $S_2$ or $h_1$ or $h_2$ satisfies at least one of the following:

(a).

$$0.5 \leq S_1/S_3 \leq 0.95;$$

(b).

$$0.6 \leq S_1/S_3 \leq 0.85;$$

(c).

$$0.5 \leq S_2/S_3 \leq 0.95;$$

(d).

$$0.6 \leq S_2/S_3 \leq 0.85;$$

(e).

$$1.05 \leq h_1/h_3 \leq 1.2;$$

(f).

$$1.1 \leq h_1/h_3 \leq 1.15;$$

(g).

$$1.1 \leq h_2/h_3 \leq 1.5;$$

or
(h).

$$1.2 \leq h_2/h_3 \leq 1.4.$$

11. The secondary battery (100) according to claim 1, wherein a width direction of the first electrode plate (21) in unwound state is defined as a second direction (Y); and a length direction of the first electrode plate (21) in unwound state is defined as a third direction (Z); the first direction (X), the second direction (Y), and the third direction (Z) being perpendicular to each other;

the recess (102) extends along the second direction (Y), and when viewed along the first direction (X), a width of a single recess (102) along the third direction (Z) is $W_1$, and $20 \ \mu m \leq W_1 \leq 300 \ \mu m$,
or, the recess (102) extends along the third direction (Z), and when viewed along the first direction (X), a width of a single recess (102) along the second direction (Y) is $W_1$, and $20 \ \mu m \leq W_1 \leq 300 \ \mu m$.

12. The secondary battery (100) according to claim 11, wherein a width of the first active material layer (212) along the second direction (Y) is W; the recess (102) extends along the second direction (Y), a length of a single recess (102) along the second direction (Y) is $W_2$; and $0.6 \leq W_2/W \leq 1$.

13. The secondary battery (100) according to claim 1, wherein when viewed along the first direction (X), a single recess (102) is substantially circular; a diameter of the single recess (102) is $D_1$, and $0.5 \ mm \leq D_1 \leq 3 \ mm$.

14. The secondary battery (100) according to claim 11 or 13, wherein a plurality of recesses (102) are provided at intervals; a spacing between adjacent recesses (102) is $D_2$, and $0.5 \ mm \leq D_2 \leq 3 \ mm$.

15. An electronic device (200), comprising the secondary battery (100) according to any one of claims 1 to 14.

FIG. 1

FIG. 2

EP 4 760 795 A2

FIG. 3

FIG. 4

FIG. 6

FIG. 7